## Europäisches Patentamt

## European Patent Office

## Office européen des brevets

(19)

(11) Veröffentlichungsnummer: **0 025 952**
**B1**

(12) **EUROPÄISCHE PATENTSCHRIFT**

(45) Veröffentlichungstag der Patentschrift:
**27.12.84**

(51) Int. Cl.³: **G 06 F 13/00**, G 06 F 9/06

(21) Anmeldenummer: **80105471.9**

(22) Anmeldetag: **12.09.80**

(54) Schaltungsanordnung für einen Mikrocomputer mit Interpretorspeicher.

(30) Priorität: **24.09.79 DE 2938570**
**17.10.79 DE 2942025**

(43) Veröffentlichungstag der Anmeldung:
**01.04.81 Patentblatt 81/13**

(45) Bekanntmachung des Hinweises auf die Patenterteilung:
**27.12.84 Patentblatt 84/52**

(84) Benannte Vertragsstaaten:
**AT BE CH DE FR GB IT LI LU NL SE**

(56) Entgegenhaltungen:
**DE - A - 2 321 262**
**DE - B - 2 201 754**

(73) Patentinhaber: **Siemens Aktiengesellschaft, Berlin und München Wittelsbacherplatz 2, D-8000 München 2 (DE)**

(72) Erfinder: **Schlang, Manfred, Dipl.-Ing., Schulstrasse 5, D-8551 Heroldsbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Schaltungsanordnung gemäss Oberbegriff des Patentanspruches.

Bei Interpretorlösungen bei Mikrocomputern mit implementierten Befehlssätzen werden bei der Verwendung von übergeordneten, insbesondere problemorientierten Programmiersprachen, z.B. FORTRAN und untergeordneten, insbesondere maschinenorientierten Programmiersprachen, z.B. ASSEMBLER, die einzelnen Befehle der übergeordneten Programmiersprache durch eine Folge von Befehlen der untergeordneten Programmiersprache interpretiert. Jede Interpretation erfordert eine Mehrfachprogrammverzweigung, wobei in der Regel die Anzahl der Zweige der Anzahl der Befehle im Befehlsvorrat der untergeordneten Programmiersprache entspricht. Derartige Mehrfachprogrammierverzweigungen werden bisher ausschliesslich durch Software verwirklicht. Hierbei wird ein Programmteil in der untergeordneten Programmiersprache geschrieben, das bei der Interpretation jedes Befehls der übergeordneten Programmiersprache zuerst durchlaufen wird und die Anfangsadresse des Interpretorzweiges in den Programmzähler des Mikroprozessors lädt. Ist ein derartiges indirektes Laden des Programmzählers des Mikroprozessors nicht möglich, so wird eine Mehrfachprogrammverzweigung durch eine Folge von Einfachverzweigungen nachgebildet, was einen grossen Zeitaufwand bei der Abarbeitung des Anwenderprogramms durch den Mikroprozessor erfordert. Die Abarbeitung einer Mehrfachverzweigung, die ausschliesslich durch Software verwirklicht wird, benötigt somit einen erheblichen Teil der Bearbeitungszeit des Zweiges selbst. Bei der schnellen Steuerung technischer Abläufe durch einen Mikroprozessor mit implementiertem Befehlssatz wird durch derartige Mehrfachprogrammverzweigungen die Ablaufsteuerung unerwünscht verlangsamt. Dies kann zur Ineffizienz einer der Maschinensprache übergeordneten Sprache führen, bzw. führt allgemein bei einer hierarchischen Ordnung mehrerer Programmiersprachen zu steigender Ineffizienz in Richtung der höchsten Sprache.

Der Erfindung liegt die Aufgabe zugrunde, eine Schaltungsanordnung für einen Mikroprozessor mit implementiertem Befehlssatz anzugeben, die eine schnellere Ausführung von Anwendungsbefehlen ermöglicht.

Erfindungsgemäss wird diese Aufgabe durch die im Patentanspruch angegebenen Merkmale gelöst.

Bei der erfindungsgemässen Schaltungsanordnung wird die Schaltung des Mikrocomputers durch einen Festwertspeicher und ein direkt übernehmendes Register ergänzt. Die Funktion dieser ergänzten Schaltungsanordnung besteht darin, dass ein Sprungbefehl in der untergeordneten Programmiersprache, der eine Ladung des Programmzählers mit konstanter Adresse beinhaltet, derart modifiziert wird, dass die Speicherzelle, die die Sprungadresse enthalten soll, mit der jeweils gewünschten Sprungadresse, die der Anfangsadresse des zu interpretierenden Befehls der übergeordneten Programmiersprache entspricht, überschrieben wird, bevor die Sprungadresse in den Programmzähler geladen wird. Dieser Vorgang wird durch sehr wenig Befehle der untergeordneten Programmiersprache gesteuert. Der entsprechende Programmteil zur Steuerung enthält einen Befehl, der das Kriterium für die Verzweigung im Befehlscode der übergeordneten Sprache auf den Datenbus des Mikrocomputers ausgibt (Befehlsholen) und aus dem modifizierten Sprungbefehl, der eine Mehrfachverzweigung durch einen unbedingten Sprungbefehl bewirkt.

Die Erfindung wird anhand der in der Zeichnung dargestellten Ausführungsbeispiele im einzelnen erläutert, wobei zur besseren Übersicht nur die zum Verständnis der Erfindung notwendigen Elemente und Verbindungen eines Mikrocomputers schematisch dargestellt sind. Es zeigen:

FIG. 1 eine schematische Darstellung eines ersten Ausführungsbeispiels der Erfindung,
FIG. 2 eine schematische Darstellung eines weiteren Ausführungsbeispiels der Erfindung.

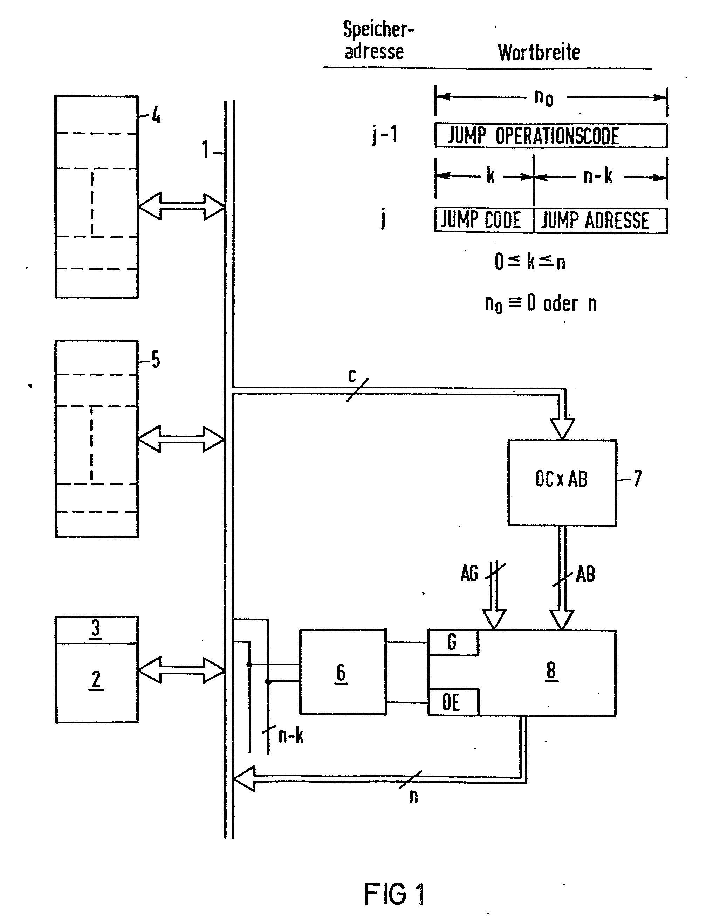

FIG. 1 zeigt den Schaltungsaufbau eines Mikrocomputers. An das Bussystem 1 des Mikrocomputers sind angeschlossen ein Mikroprozessor 2 mit einem nicht dargestellten Programmzähler für die in der übergeordneten Programmiersprache geschriebenen Anweisungen eines Anwenderprogramms, ein Anwenderprogrammspeicher 4, der die Anweisungen des Anwenderprogramms enthält und ein Interpretorspeicher 5, der das Interpretationsprogramm enthält. Der Interpretorspeicher 5 ist in eine Anzahl von Speicherbereiche eingeteilt. In jedem dieser Speicherbereiche ist eine Befehlsfolge in der untergeordneten, insbesondere maschinenorientierten Programmiersprache eingeschrieben, die eine Anweisung in der übergeordneten Programmiersprache interpretiert. Am Ende eines jeden Speicherbereichs des Interpretorspeichers 5 ist ein Rücksprungbefehl programmiert. Der Interpretorspeicher 5 enthält weiterhin einen Speicherbereich, in dem der Befehl für das Befehlsholen des laufenden Befehls der übergeordneten Programmiersprache gespeichert ist. In einem letzten Speicherbereich am Ende des Interpretorspeichers ist der Operationsteil eines Sprungbefehls gespeichert.

Der dargestellte Mikrocomputer enthält weiterhin einen Festwertspeicher 7, insbesondere ein PROM, einen direkt übernehmenden Speicher 8 und einen Adressdecoder 6. Die Eingänge des Festwertspeichers 7 sind an das Bussystem angeschlossen, das eine der Wortbreite der untergeordneten Programmiersprache entsprechende Anzahl n von Datenleitungen aufweist. Die Anzahl der Adressen des Festwertspeichers entspricht der Operationscodelänge OC der übergeordneten Programmiersprache. Für die Anzahl c der eingangsseitigen Adressleitungen des Festwertspeichers 7 gilt die Beziehung (1):

$$OC = 2^c \qquad (1)$$

Der Festwertspeicher 7 enthält eine Anzahl von adressierbaren Speicherplätzen, in denen die Einsprungadressen für den Interpretorspeicher 5 fest gespeichert sind. Die Anzahl der Ausgänge des Festwertspeichers 7 entspricht der Adressbreite AB bzw. Länge für das Interpretationsprogramm, die dem Logarithmus der Basis 2 der Länge des Interpretationsprogramms in Anzahl der Speicherworte entspricht. Die Ausgänge des Festwertspeichers 7 sind mit einer ersten Anzahl AB von Eingängen des direkt übernehmenden Speichers 8 verbunden. Das direkt übernehmende Register 8 ist vorzugsweise als D-Register in TTL-Technik mit tristate-Ausgängen ausgebildet. Eine weitere Anzahl Eingänge AG des D-Registers 8 sind mit den höherwertigen Bits für die Anfangadresse des Interpretationsprogramms im Adressbereich und den restlichen Bits des JUMP-Code der Anzahl k verbunden. Es gilt für die Eingänge AG die Beziehung (2):

$$AG \equiv n - AB + k \qquad (2)$$

Das D-Register 8 wird vom Adressdecoder 6 gesteuert, der eingangsseitig an den Steuerbus und den Adressbus n–k in dem Bussystem angeschlossen ist. Der Adressdecoder 6 erzeugt ein Ladesteuersignal für den entsprechenden Eingang G des D-Registers 8, das bei der Adresse j–1 aktiviert wird, sowie ein Lesesteuersignal für den Ausgang OE des D-Registers 8, das bei der Adresse j aktiviert wird. Die Adressen j–1 und j sind die Adressen des modifizierbaren JUMP-Befehls, die neben der Schaltungsdarstellung angegeben sind. Dabei entspricht die Wortbreite $n_o$ entweder 0 oder n. Weiterhin entspricht $n_o + k$ der Länge des JUMP-Operationscodes und n–k der Länge der JUMP-Adresse, die wiederum der Grösse des Adressbereichs entspricht.

Die Aktivierung der erfindungsgemässen Schaltungsergänzung eines Mikrocomputers erfolgt durch einen Programmteil, der aus einem Befehl besteht, der das Kriterium für die Verzweigung im Befehlscode der übergeordneten Programmiersprache auf den Datenbus des Mikroprozessorsystems ausgibt, und aus dem unbedingten Sprungbefehl, der die Mehrfachverzweigung bewirkt. Durch diesen Programmteil wird der Sprungbefehl in der untergeordneten Programmiersprache, der eine Programmzählerladung mit konstanter Adresse bewirkt, über den Festwertspeicher 7 und das D-Register 8 derart modifiziert, dass die Speicherzelle, die die Sprungadresse enthalten soll, mit der Anfangsadresse des zu interpretierenden Befehls als neuer Sprungadresse überschrieben wird, bevor sie in den Programmzähler geladen wird. Damit ergibt sich folgender Funktionsablauf bei einer Abarbeitung eines Befehls der übergeordneten Programmiersprache:

Der Befehl in der übergeordneten Programmiersprache wird in den Mikroprozessor geladen und adressiert über das Bussystem den Festwertspeicher 7. Der Mikroprozessor läuft auf die Adresse j–1 und erkennt den Operationscode eines Sprungbefehls (JUMP) aus. Dabei schaltet der Programmzähler des Mikroprozessors automatisch auf die Adresse j. Bei der Adresse j steht die vom Festwertspeicher 7 interpretierte Einsprungadresse für den Prozessor im D-Register 8 bereit. Damit wird der Programmzähler 3 des Mikroprozessors 2 auf den Anfang des entsprechenden Interpretationszweiges im Interpretorspeicher 5 gestellt. Der Befehl in der übergeordneten Programmiersprache kann somit ohne zusätzliche Zeitverzögerung interpretiert werden.

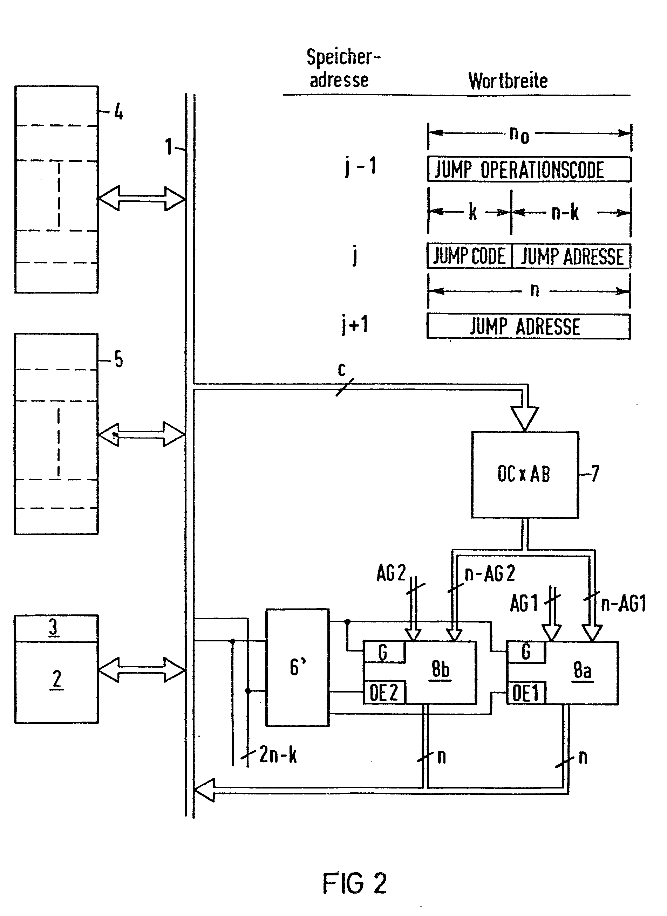

FIG. 2 zeigt eine ähnliche aufgebaute Anordnung, bei der jedoch im Gegensatz zu FIG. 1 zwei Festwertspeicher 8a und 8b vorgesehen sind. Bei dieser Ausführungsform besteht die Sprungadresse aus zwei aufeinanderfolgenden Speicherworten, die jeweils in einem der beiden Festwertspeicher 8a, 8b fest eingespeichert sind. Beide D-Register 8a und 8b werden an ihren Eingängen G von einem Ladesteuersignal bei der Adresse j–1 aktiviert und übernehmen dabei die an ihren Dateneingängen anstehenden Informationen. Die Dateneingänge AG1 des D-Registers 8a entsprechen den restlichen JUMP-Code Bits k. Die weiteren Dateneingänge n–AG1 des Festwertspeichers 8a sind mit einem Teil der Ausgänge AB des Festwertspeichers 7 verbunden. Die Dateneingänge AG2 des D-Registers 8b sind mit den höherwertigen Bits für die Anfangsadresse des Interpretationsprogramms im Adressbereich belegt. Es gilt die Beziehung (3):

$$AG2 \equiv 2n - AB - k.$$

Ausgangsseitig sind die beiden D-Register 8a und 8b mit dem Datenbus verbunden, wobei n wiederum der Wortbreite der untergeordneten Programmiersprache entspricht.

Der Adressdecoder 6′, der eingangsseitig wiederum mit dem Steuerbus und dem Adressbus 2n–k verbunden ist, erzeugt ein Lesesteuersignal für den Eingang OE1 des D-Registers 8a, das bei der Adresse j aktiviert wird, sowie ein Lesesteuersignal für den Ausgang OE2 des D-Registers 8b, das bei der Adresse j+1 aktiviert wird.

Die Eingangsbeschaltung der beiden D-Register 8a und 8b kann alternativ auch so vorgenommen werden, dass die Dateneingänge AG1 des D-Registers 8a mit den restlichen JUMP-Code Bits und höherwertigen Bits für die Anfangsadresse des Interpretationsprogramms im Adressbereich belegt sind und die Dateneingänge AG2 des D-Registers 8b mit Ø belegt sind.

Neben der Schaltungsdarstellung der FIG. 2 sind die Speicheradressen j–1, j, j+1 des modifizierbaren JUMP-Befehls veranschaulicht. Die Wortbreite $n_o$ entspricht entweder 0 oder der Wortbreite n der untergeordneten Programmiersprache, $n_o + k$ entspricht der Länge des JUMP-Operationscodes. 2n–k entspricht der Länge der JUMP-Adresse und damit der Grösse des Adressbereichs.

**Patentanspruch**

Schaltungsanordnung für einen Mikrocomputer mit einem Interpretorspeicher (5) zur Aufnahme eines implementierten Befehlssatzes in einer untergeordneten, insbesondere maschinenorientierten Programmiersprache und einem Anwenderprogrammspeicher (4) zur Aufnahme der Anweisungen eines Anwenderprogrammes in einer übergeordneten, insbesondere problemorientierten Programmiersprache, sowie einem Interpretierer zur Steuerung der Bearbeitung der Anweisungen des Anwenderprogrammes in der übergeordneten Programmiersprache mittels Befehlsfolgen in der untergeordneten Programmiersprache, gekennzeichnet durch einen Festwertspeicher (7) zur Aufnahme der Einsprungadressen für den Interpretorspeicher (5) und ein diese Einsprungadressen direkt übernehmendes Register (8, 8a, 8b), wobei die Eingänge des Festwertspeichers (7) an diejenigen Datenleitungen des Bussystems (1) angeschlossen sind, die mit dem Operationscode der übergeordneten Programmiersprache belegt sind, und die Ausgänge des Festwertspeichers (7) mit den Dateneingängen des Registers (8, 8a, 8b) verbunden sind, das von einem vom Bussystem (1) gesteuerten Adressdecoder (6, 6') mit Ladesteuersignalen (G) zur Übernahme der Einsprungadresse in das Register (8, 8a, 8b) und Lesesteuersignalen (OE, OE1, OE2) zur Übernahme des Registerinhaltes in einen Mikroprozessor (2, 3) gesteuert wird, wobei der Adressdecoder (6, 6') ein Ladesteuersignal erzeugt, wenn der Anwenderprogrammspeicher (4) aufgrund eines einen neuen Anwenderbefehl aufrufenden Ladebefehls im Interpretorspeicher (5) angesprochen wird, und ein Lesesteuersignal erzeugt, wenn der Mikroprozessor (2) den Programmzählerstand für einen auf den Ladebefehl folgenden Sprungbefehl (Fig. 1: j–1, j) im Interpretorspeicher (5) auf den Adressleitungen des Bussystems (1) ausgibt.

**Claim**

A circuit arrangement for a microcomputer with an interpreter store (5) for receiving an implemented command set in a subordinate, in particular machine-oriented, programme language and with a user programme store (4) for receiving the instructions of a user programme in a superordinate, in particular problem-oriented, programme language and with an interpreter which serves to control the processing of the instructions of the user programme in the superordinate programme language by means of command sequences in the subordinate programme language, characterised by a read-only memory (7) for receiving the entry addresses for the interpreter store (5) and by a register (8, 8a, 8b) which directly accepts the entry addresses, where the inputs of the read-only memory (7) are connected to those data lines of the bus system (1) which are occupied with the operation code of the superordinate programme language, and the outputs of the read-only memory (7) are connected to the data inputs of the register (8, 8a, 8b) which is controlled by an address decoder (6, 6') which is controlled by the bus system (1) and has load control signals (G) for transferring the entry address into the register (8, 8a, 8b) and read control signals (OE, OE1, OE2) for transferring the register content into a microprocessor (2, 3), where the address decoder (6, 6') produces a load control signal if as a result of a load command calling up a new user command, the user programme store (4) is addressed in the interpreter store (5), and produces a read control signal if the microprocessor (2) emits, in the interpreter store (5) on the address lines of the bus system (1), the programme count for a jump command (Fig. 1: j–1, j), following the load command.

**Revendication**

Montage pour un microordinateur avec une mémoire d'interpréteur (5) pour la prise en charge d'un répertoire d'instructions mis en œuvre dans un language de programmation subordonné, en particulier langage orienté machine, et avec une mémoire de programme utilisateur (4) pour la prise en charge des instructions d'un programme utilisateur dans un langage de programmation orienté vers les problèmes, ainsi qu'avec un interpréteur pour la commande du traitement des instructions du programme d'utilisateur dans le langage de programmation d'ordre supérieur à l'aide de séquences d'instructions dans le langage de programmation subordonné, caractérisé par une mémoire morte (7) pour la réception des adresses de reprise pour la mémoire d'interpréteur (5) et par un registre (8, 8a, 8b) prenant directement en charge les adresses de reprise, les entrées de la mémoire morte (7) étant reliées aux lignes de transmission des données du système de bus (1) qui sont occupées par le code opération du langage de programmation d'ordre supérieur, alors que les sorties de la mémoire morte (7) sont reliées aux entrées de données du registre (8, 8a, 8b) qui est commandé par un codeur d'adresses (6, 6'), contrôlé par le système de bus (1), au moyen de signaux de commande de chargement (G) en plus de la prise en charge des adresses de reprise dans le registre (8, 8a, 8b), et de signaux de commande de la lecture (OE, OE1, OE2) en vue de la prise en charge du contenu du registre dans un microprocesseur (2, 3), étant noté que le codeur d'adresses (6, 6') produit le signal de commande du chargement lorsque la mémoire de programme d'utilisateur (4) est sollicitée en réponse à une instruction de chargement appelant une nouvelle instruction d'utilisateur, dans la mémoire d'interpréteur (5), et produit un signal de commande de la lecture lorsque le microprocesseur (2) émet sur les lignes de transmission de données du système de bus, l'état de comptage du programme pour une instruction de saut (figure 1: j–1, j) qui suit l'instruction de chargement, dans la mémoire d'interpréteur (5).

Speicheradresse

Wortbreite

$n_0$

j-1 | JUMP OPERATIONSCODE |

k → | ← n-k →

j | JUMP CODE | JUMP ADRESSE |

$0 \leq k \leq n$

$n_0 \equiv 0$ oder $n$

c

OC x AB — 7

AG | AB

G

6 | 8

OE

n-k

n

**FIG 1**

Speicheradresse

Wortbreite

$n_0$

j − 1

JUMP OPERATIONSCODE

k    n − k

j

| JUMP CODE | JUMP ADRESSE |

n

j + 1

JUMP ADRESSE

c

OC x AB — 7

AG 2    n − AG 2    AG 1    n − AG 1

6'

G    8b    G    8a

OE 2    OE 1

4

5

3

2

1

2n − k    n    n

FIG 2

7